# EUROPEAN PATENT APPLICATION

(11) **EP 4 693 071 A1**
(43) Date of publication of application: **11.02.2026**
(21) Application number: 24777678.4
(22) Date of filing: 07.03.2024
(51) Int. Cl.: G06F 16/44

(54) **METHOD AND APPARATUS FOR CONTENT PRESENTATION, AND DEVICE AND STORAGE MEDIUM**

(30) Priority: 28.03.2023 CN 202310316599
(71) Applicant: Beijing Zitiao Network Technology Co., Ltd., Beijing 100190 (CN)
(72) Inventor: RAO, Qizheng, Beijing 100028 (CN); LIU, Jun, Beijing 100028 (CN); ZHANG, Wenshu, Beijing 100028 (CN)
(74) Representative: Grünecker Patent- und Rechtsanwälte PartG mbB
(86) International application number: PCT/CN2024/080630
(87) International publication number: WO 2024/198888

(57) **Abstract**

According to embodiments of the disclosure, a method, apparatus, device and storage medium for content presentation are provided. In one method, a content presentation page is presented to present a first set of media content items in a first view mode in the content presentation page, the content presentation page being presented at least by selecting a predetermined navigation tab; and in response to detecting a second selection operation for the navigation tab, the first view mode is switched to a second view mode to present a second set of media content items in the second view mode in the content presentation page. Therefore, the scheme of conveniently switching the view mode may be provided, and the user is helped to quickly screen and discover the interested content.

## Description

This application claims the benefit of Chinese Patent Application No. 2023103165999, filed on March 28, 2023, entitled 'METHOD, APPARATUS, DEVICE, AND STORAGE MEDIUM FOR CONTENT PRESENTATION,' the entire content of which is incorporated herein by reference.

### FIELD

Example embodiments of the present disclosure generally relate to the field of computers, and in particular, to a method, apparatus, device, and storage medium for content presentation.

### BACKGROUND

Nowadays, more and more applications are designed to provide users with various services. For example, users may browse various types of media contents or shop online. These applications may provide users with more information to satisfy the needs of user selection and speed up the purchase decision by recommending, presenting and switching the presentation mode of the associated content.

### SUMMARY

**In** a first aspect of the present disclosure, a method of content presentation is provided. The method includes: presenting a content presentation page to present a first set of media content items in a first view mode in the content presentation page, the content presentation page being presented at least by selecting a predetermined navigation tab; and in response to detecting a second selection operation for the navigation tab, switching from the first view mode to a second view mode to present a second set of media content items in the second view mode in the content presentation page.

**In** a second aspect of the present disclosure, an apparatus for content presentation is provided. The apparatus includes: a presenting module configured to present a content presentation page to present a first set of media content items in a first view mode in the content presentation page, the content presentation page being presented at least by selecting a predetermined navigation tab; and a switching module configured to, in response to detecting a second selection operation for the navigation tab, switch from the first view mode to a second view mode to present a second set of media content items in the second view mode in the content presentation page.

**In** a third aspect of the present disclosure, an electronic device is provided. The device includes: at least one processing unit; and at least one memory coupled to the at least one processing unit and storing instructions for execution by the at least one processing unit, the instructions, when executed by the at least one processing unit, causing the electronic device to perform the method of the first aspect.

**In** a fourth aspect of the present disclosure, a computer-readable storage medium is provided. The computer-readable storage medium has a computer program stored thereon, the computer program being executable by a processor to implement the method of the first aspect.

**It** would be appreciated that the content described in this content section is not intended to limit the key features or important features of the embodiments of the present disclosure, nor is it intended to limit the scope of the present disclosure. Other features of the present disclosure will become readily understood from the following description.

### BRIEF DESCRIPTION OF DRAWINGS

The above and other features, advantages, and aspects of various embodiments of the present disclosure will become more apparent from the following detailed description taken in conjunction with the accompanying drawings. In the drawings, the same or similar reference numbers refer to the same or similar elements, wherein:
FIG. 1 illustrates a schematic diagram of an example environment in which embodiments of the present disclosure may be implemented;
FIGS. 2A to 2E illustrate schematic diagrams of switching view modes according to some embodiments of the present disclosure;
FIG. 3A to 3C illustrate schematic diagrams of switching view modes according to some further embodiments of the present disclosure;
FIGS. 4A to 4D illustrate schematic diagrams of switching view module according to still further embodiments of the present disclosure;
FIG. 5 illustrates a flowchart of a method of content presentation according to some embodiments of the present disclosure;
FIG. 6 illustrates a block diagram of an apparatus for content presentation according to some embodiments of the present disclosure; and
FIG. 7 illustrates a block diagram of a device capable of implementing various embodiments of the present disclosure.

### DETAILED DESCRIPTION

Embodiments of the present disclosure will be described in more detail below with reference to the accompanying drawings. Although certain embodiments of the present disclosure are shown in the accompanying drawings, it would be appreciated that the present disclosure may be implemented in various forms and should not be construed as limited to the embodiments set forth herein, but rather, these embodiments are provided for a thorough and complete understanding of the present disclosure. It would be appreciated that the drawings and embodiments of the present disclosure are only for illustrative purposes and are not intended to limit the scope of the present disclosure.

**In** the description of the embodiments of the present disclosure, the term 'including' and the like would be understood as open-ended including, that is, 'including but not limited to'. The term 'based on' would be read as 'based at least in part on. ' The term 'an embodiment' or 'the embodiment' would be read as 'at least one embodiment'. The term 'some embodiments' would be understood as 'at least some embodiments'. Other explicit and implicit definitions may also be included below.

Herein, unless explicitly stated otherwise, 'in response to A, performing a step' does not mean that the step is performed immediately after 'A', but one or more intermediate steps may be included.

**It** would be appreciated that data involved in the present technical solution (including but not limited to the data itself, the acquisition, or use of the data) should comply with the requirements of the corresponding legal regulations and related provisions.

**It** would be appreciated that, before the technical solutions disclosed in the embodiments of the present disclosure are used, the user s would be notified of the types, usage ranges, usage scenarios, and the like of the personal information about the present disclosure according to related legal regulations in an appropriate manner and authorization of the user shall be obtained.

For example, in response to receiving an active request from a user, prompt information is sent to the user to explicitly prompt the user that an operation requested to be executed by the user needs to obtain and use personal information of a user, so that the user may autonomously select, according to prompt information, whether to provide personal information for software or hardware such as an electronic device, an application, a server, or a storage medium that executes the operation of the technical solutions of the present disclosure.

As an optional but non-limiting implementation, in response to receiving an active request from a user, a manner of sending prompt information to the user may be, for example, a pop-up window manner, and the pop-up window may present the prompt information in a text manner. In addition, the pop-up window may also carry a selection control for the user to select 'agree' or 'disagree' to provide personal information to the electronic device.

**It** would be appreciated that the above notifying and user authorization obtaining process are only illustrative which do not limit the implementation of this disclosure. Other methods that satisfy relevant laws and regulations may also be applied to the implementation of this disclosure.

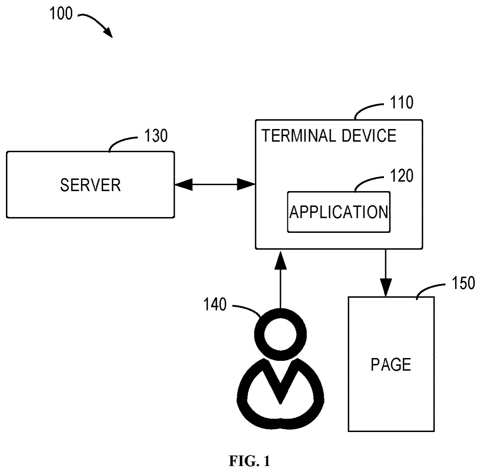

**FIG.** 1 illustrates a schematic diagram of an example environment 100 in which embodiments of the present disclosure may be implemented. In this example environment 100, an application 120 is installed in the terminal device 110. The user 140 may interact with the application 120 via the terminal device 110 and/or an attachment device of the terminal device 110. The application 120 may be a social application (for example, a content sharing application), an online shopping application, or any other suitable application.

**In** the environment 100 of FIG. 1, the terminal device 110 may present a page 150 of the application 120 if the application 120 is active. The page 150 may include various pages that the application 120 may provide, such as a content presentation page, a content creating page, a content posting page, a message page, a homepage, and so forth. The application 120 may provide content view function to view various types of content posted in the application 120. Via the corresponding page, the application 120 may provide content associated with the media content or shopping content to the user 140. Via appropriate means, such as clicking or selecting a page element, the application 120 may also provide the user 140 with the selection and switching of the presentation mode of the associated content. As used herein, 'media content' includes one or more types of contents, such as images, image sets, videos, animated images, audio, text, and the like.

**In** some embodiments, the terminal device 110 communicates with the server 130 to implement provisioning of services to the application 120. The terminal device 110 may be any type of mobile terminal, fixed terminal, or portable terminal, including a mobile phone, a desktop computer, a laptop computer, a notebook computer, a netbook computer, a tablet computer, a media computer, a multimedia tablet, a personal communication system (PCS) device, a personal navigation device, a personal digital assistant (PDA), an audio/video player, a digital camera/camcorder, a positioning device, a television receiver, a radio broadcast receiver, an electronic book device, a gaming device, or any combination of the foregoing, including accessories and peripherals of these devices, or any combination thereof. In some embodiments, the terminal device 110 may also support any type of interface for a user (such as a 'wearable' circuit, etc. ). The server 130 may be various types of computing systems/servers capable of providing computing power, including, but not limited to, mainframes, edge computing nodes, computing devices in a cloud environment, and the like.

**It** would be appreciated that the structures and functions of the various elements in the environment 100 are described for illustrative purposes only and do not imply any limitation to the scope of the present disclosure.

Generally, content associated with a user is presented in a specific content presentation page of an application, for example, a navigation tab 'recommendation' page, including content posted by a user, content collected by a user, content like a user like, and the like. However, these media content items are all organized and presented in a fixed manner, e.g., such media content is typically presented in a single-column. However, the media content presented by the user for the content presentation page may have different appeal. For example, when a user needs to quickly browse a large number of media contents, the user expects the content presentation page to simultaneously present as much media content as possible. When the user needs to more accurately locate the media content of interest, the user may desire the content presentation page while presenting relatively less media content. A single organization and presentation mode may not satisfy the demands of users in different situations, resulting in poor user experience.

According to an embodiment of the present disclosure, a solution for content presentation is provided. According to the solution of the embodiments of the present disclosure, a content presentation page is presented to present a first set of media content items in a first view mode in the content presentation page. The content presentation page may be presented at least by selecting a predetermined navigation tab. In response to detecting a second selection operation for the navigation tab, the first view mode is switched to a second view mode to present a second set of media content items in the second view mode in the content presentation page. In this way, the user does not need to switch the view mode by way of a fixed button. By means of the existing navigation tab, the user may intuitively and conveniently switch the view mode, thereby obtaining a better content viewing experience.

Some example embodiments of the present disclosure will be described below with continued reference to the accompanying drawings.

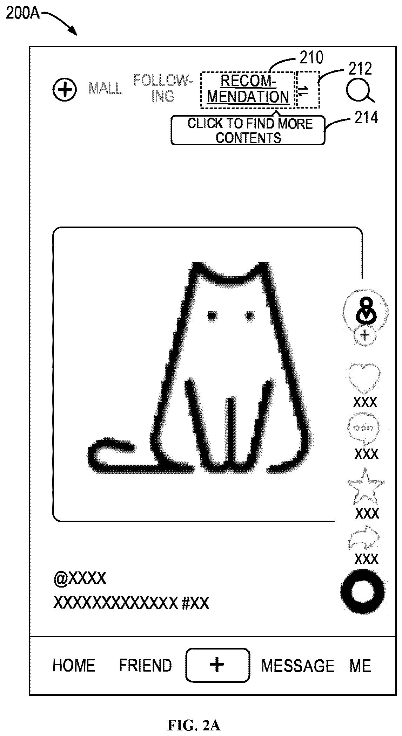

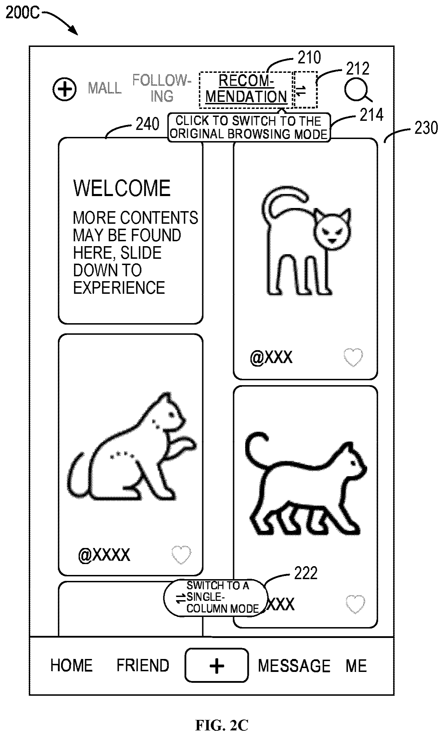

FIGS. 2A-2E illustrate schematic diagrams of examples 200A- 200E of switching view modes according to some embodiments of the present disclosure. Examples 200A through 200E may be implemented at the terminal device 110. For ease of discussion, the examples 200A through 200E will be described with reference to the environment 100 of FIG. 1.

In the environment 100, the terminal device 110 presents the page 150 of the application 120. If more information needs to be presented in the page 150 and is miscellaneous, the information is often classified and presented, so that the user may obtain the information in a more concise manner. Presenting information in classification often needs to set a plurality of tabs corresponding to different information on a page. The user may obtain the information corresponding to the tab by switching different tabs. In example 200A, the page includes a plurality of tabs corresponding to different information, such as 'mall,' 'following,' 'home,' 'friend,' and so on. In an embodiment of the present disclosure, a page, including a content presentation page, may be presented at least by selecting a predetermined navigation tab. That is, the navigation tab may be configured to navigate to the content presentation page.

**In** some cases, the terminal device 110 presents a particular content presentation page, such as a particular content presentation page of the application 120, and presents the first set of media content items in the first view mode in the content presentation page.

In some embodiments, the terminal device 110, in response to detecting a first selection operation for the navigation tab, presents the content presentation page to present the first set of media content items in the first view mode in the content presentation page. In the example 200A of FIG. 2A, a navigation tab 210 is a 'recommendation' tab, and a 'recommendation' page may be presented by selecting the navigation tab. It would be appreciated that this is merely illustrative and not intended to limit the aspects of the present disclosure. To select or switch the view mode with existing tabs, the navigation tab 210 may be further tabs, such as 'home', that support navigation to the content presentation page. In some embodiments, alternatively or in addition, the content presentation page may also be presented by detecting a launch operation of the application, e.g., the content presentation page being a default page presented when the application is launched. Upon launching the application, the first set of media content items may be presented in the first view mode in the content presentation page.

**In** embodiments of the present disclosure, as will be described in detail below, a navigation tab may be configured to select or switch view modes in the content presentation page. In some embodiments, the terminal device 110 presents a graphical interface element having a predetermined shape within a predetermined adjacent area of the navigation tab 210. The graphical interface element is configured to prompt that a view mode of the content presentation page is switchable. The presentation style of the graphical interface element includes, but is not limited to, a static graphic, a dynamic graphic, a graphic with a short-time animation effect, and the like. In the example 200A to the example 200D, the terminal device 110 presents a graphical interface element 212 on one side of the navigation tab 210. The presentation style of the graphical interface element 212 is a bidirectional double arrow. In this way, the user may be reminded of a new function, and the user may be prompted to perform bidirectional switching.

In some embodiments, the terminal device 110 presents guidance information in association with the navigation tab 210, prompting the user to explore new functions. The presentation style of the guidance information includes, but is not limited to, a bubble, a widget, and the like. In the example 200A, the presentation content of guidance information 214 is 'click to find more contents'. It would be appreciated that this is merely illustrative and not intended to limit the aspects of the present disclosure. The guidance information 214 may also present other contents or other presentation styles, such as a content 'click to find more' or a finger with animation effects, etc.

**The** first selection operation includes, but is not limited to, performing single point contact, multi-point touch, and sliding in an area corresponding to the navigation tab 210. It would be appreciated that this is merely illustrative and not intended to limit the aspects of the present disclosure. The first selection operation may also be further gesture operations, stylus operations, or further interaction operations, with the aim of controlling the selection or switching of the view mode in a convenient and quick manner. Alternatively or in addition, the first selection operation also includes an operation performed within an area corresponding to the graphical interface element 212.

**The** content presentation page refers to a page that pushes contents, for example, a recommendation page, a same-city page, and the like. Different pages are configured to aggregate media content items posted by different user groups. A set of media content items that may be presented in a content presentation page may include various types of media content items. The different classified media content items may include, for example, a set of media content items posted by the user, a set of media content items collected by the user, a set of media content items liked by the user (e.g., likes), and so forth. The media content item to be presented in the content presentation page may be determined according to the application design requirement. The media content items and the number of media content items to be presented may vary in different scenarios.

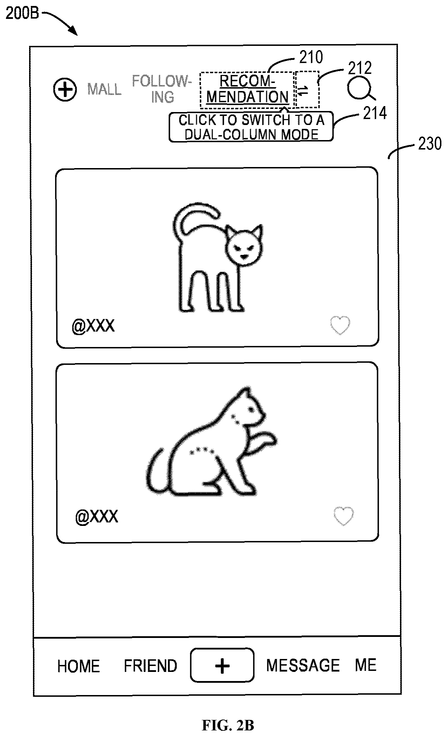

As shown in the example 200A of FIG. 2A and the example 200B of FIG. 2B, the terminal device 110 presents the content presentation page 230 to the user 140, and in the page presentation content 230, the terminal device 110 presents the first set of media content items in the first view mode. The first view mode may be a default mode, or a user set mode, in the examples 200A-200E, the first view mode is a single-column mode (also referred to as a single-column view mode), and the second view mode is a dual-column mode. It would be appreciated that this is merely illustrative and not intended to limit the aspects of the present disclosure. For example, the first view mode may be a dual-column mode (also referred to as a dual-column view mode) and the second view mode may be a three-column mode. The first view mode and the second view mode may also be interchanged.

**In** some embodiments, the first view mode includes a single-column view mode, and the second view mode includes a multi-column view mode. The single-column view mode may reduce the cost of user thinking and selection. The multi-column view mode facilitates the user to explore more content of interest. Providing the two view modes may facilitate the user to distinguish between the single-column view mode and the multi-column view mode, and then select or switch according to the preference.

Alternatively or in addition, in the content presentation page 230, the terminal device 110 presents the guidance information 214 in association with the navigation tab 210 prompting the user to switch the view mode. In the example 200B, the terminal device 110 presents the media content in a single-column mode in the content presentation page 230, and the content of the guidance information 214 is a 'click to switch to a dual-column mode'. In the example 200C, the terminal device 110 presents the media content in a dual-column mode in the content presentation page 230, and the content of the guidance information 214 is 'click to switch to the original browsing mode' or 'click to switch to a single-column mode'. It would be appreciated that this is merely illustrative and not intended to limit the aspects of the present disclosure.

The terminal device 110 detects the second selection operation for the navigation tab 210, and switches from the first view mode to the second view mode. Correspondingly, the terminal device 110 presents the second set of media content items in the second view mode in the content presentation page 230. In the example 200C, the terminal device 110 presents the media content in a dual-column mode in the content presentation page 230, compared with the single-column mode, a greater number of media content items may be presented. These media content items may include some or all of the media content items in the example 200B, or may be re-pushed based on design policies. The second set of media content items may include at least the first set of media content items, and/or may include further media content items.

**In** some embodiments, the second selection operation includes a selection operation on the navigation tab 210 and/or the graphical interface element 212 or a selection operation within a predetermined adjacent area of the navigation tab 210 and/or the graphical interface element 212, such as a click operation.

**In** some embodiments, after switching from the first view mode to the second view mode, the terminal device 110 presents description information about the second view mode in a predetermined area of the content presentation page 230, thereby providing the corresponding introduction information to the user. In the example 200C, the content presentation page 230 includes description information 240 presented in the form of a card. Alternatively or in addition, the terminal device 110 may present the description information 240 in a highlighted location of the content presentation page 230, such as a first display location in a dual-column mode. The presentation content of the description information 240 is, for example, 'Welcome! More contents may be found here, slide down to experience! Certainly, any other description information may be configured as required. Alternatively or in addition, the terminal device 110 may detect a selection operation for the description information 240 to switch to a further page, such as a more detailed introduction page for the current view mode.

**In** some embodiments, when presenting in the second view mode, the terminal device 110 presents a third switching control 222 in the content presentation page 230. For example, in the example 200C, the terminal device 110 presents the third switching control 222 at a location near the bottom of the content presentation page 230. The presentation content of the third switching control 222 is, for example, 'switching to a single column'. The terminal device 110, in response to detecting a selection operation on the third switching control 222, switches from the second view mode to the first view mode, to present the first set of media content items in the first view mode in the content presentation page 230. In this way, prompt information about the switching mode is provided without affecting the user viewing the media content.

**In** some embodiments, when the terminal device 110 switches from the first view mode to the second view mode, or switches from the second view mode to the first view mode, the switching control is presented in an animation effect. For example, the terminal device 110 may present the switching control in a slight shaking manner, or present the switching control in a step-less jumping manner, thereby attracting the attention of the user, and achieving the effect of prompting the user to switch the view mode. Alternatively or in addition, the terminal device 110 detects the number of switching of the view mode and presents the switching control within a predetermined number of switching. In other words, after the predetermined number of switching is exceeded, the terminal device 110 no longer presents the switching control. In this way, after the user is familiar with how to switch the view mode, the blocking of the media content by the switching control is avoided.

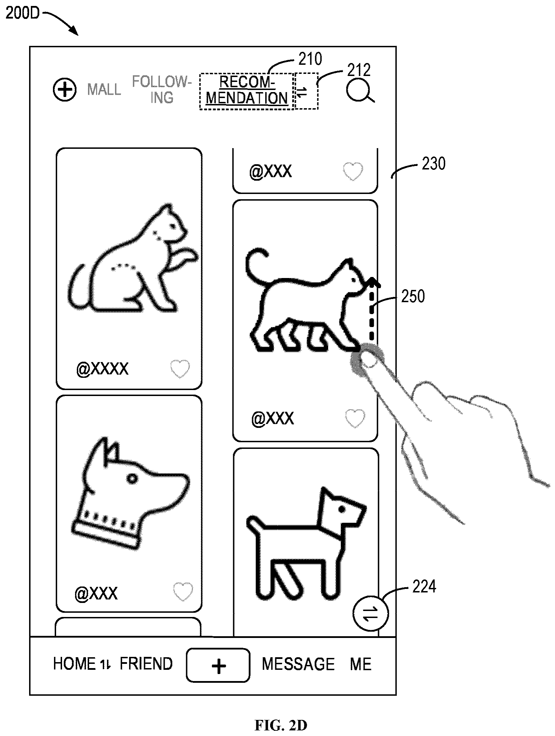

**In** some embodiments, the terminal device 110, in response to detecting a predetermined operation for page scrolling when presenting in the second view mode, adjusts a presentation mode of the third switching control 222. The adjusted presentation mode of the switching control includes at least one of the following: presenting the third switching control 222 in a reduced view, or moving the third switching control 222 to an edge area presentation of the content presentation page 230. In the example 200C, the terminal device 110 presents the third switching control 222 in a biased and centered area of the content presentation page 230. If the terminal device 110 detects a predetermined operation 250 of an upward sliding page, as shown in FIG. 2D, the terminal device 110 adjusts the third switching control 222 to a control 224, and presents it in the area to the lower and right of the content presentation page 230. In this way, occlusion of media content may be avoided while the user is browsing.

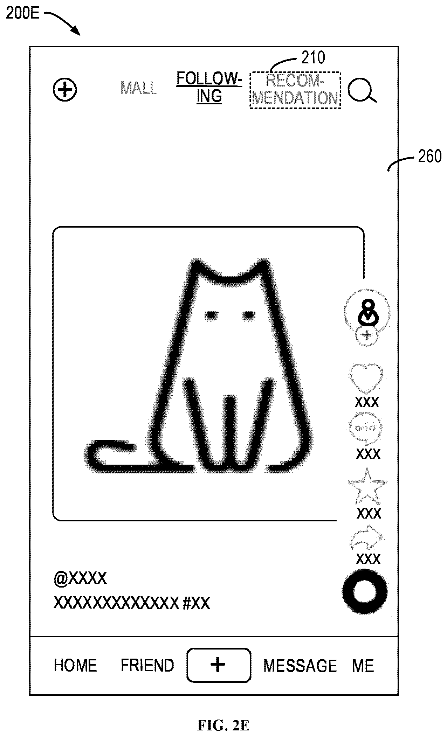

**In** some embodiments, referring to FIG. 2D and FIG. 2E, the terminal device 110, in response to detecting a first page switching operation, switches from the content presentation page 230 to a first page 260. In addition, the terminal device 110 ceases presenting the graphical interface element 212 while presenting the first page 260. For example, upon switching from a tab page 'recommendation' to a tab page 'following', the terminal device 110 no longer displays a bidirectional double arrow prompting the switch near the tab page 'recommendation'. The first page 260 may be a further content presentation page, or may be a live streaming page, a shopping page, or the like. Alternatively or in addition, the first page 260 and the content presentation page 230 are pages of a same level. In the examples 200A-200E, the tab page 'mall', tab page 'following', and tab page 'recommendation' are pages of a same level. The terminal device 110 may switch between corresponding pages by detecting a selection operation on the tab page.

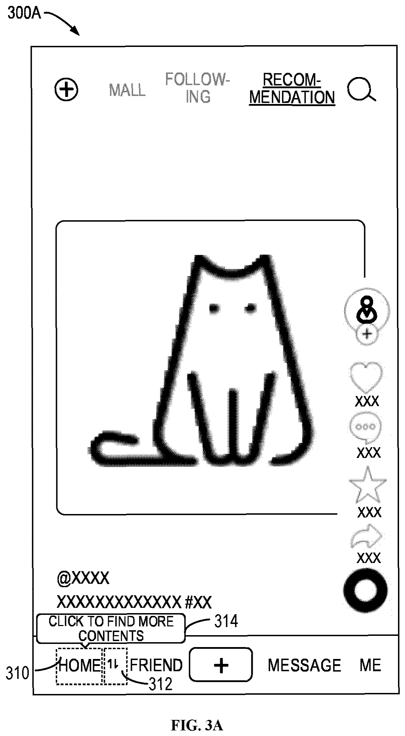

**In** the embodiments described above, the navigation tab is a 'home' for description. The 'home' may be navigated to a recommended page by the navigation tab. As previously described, as an example of the content presentation page, the recommended page is further navigated by a sub-tab 'recommendation' under 'Home'. In some embodiments, the navigation tab may also be a further navigation tab (primary navigation tab), such as a navigation tab 'home', for navigating to the current content presentation page. Similar to the embodiments described with respect to FIGS. 2A-2E, the switching of modes may be viewed through a selection operation on or an adjacent area of the navigation tab. As shown in the example 300A shown in FIG. 3A, the media content item is presented in a first view mode (e.g., single-column mode) in the page by navigating the tab 'home' to the current content presentation page. In addition, a graphical interface element 312 of a predetermined shape and guidance information 314 are also presented near a navigation tab 'Home' 310. The guidance information 314 is configured to guide the user to indicate that clicking the navigation tab 'Home' 310 may implement switching to a dual-column mode.

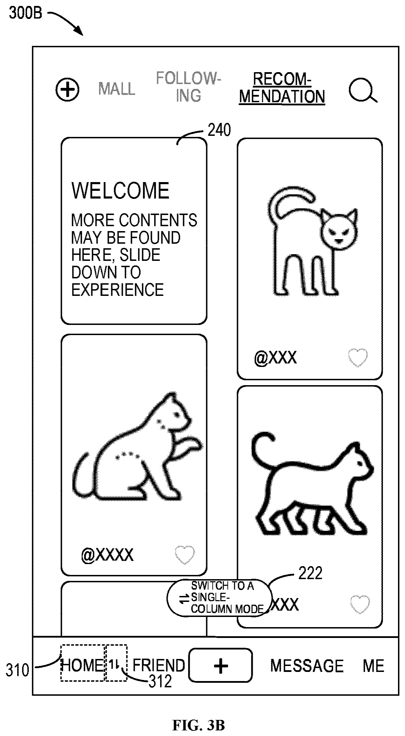

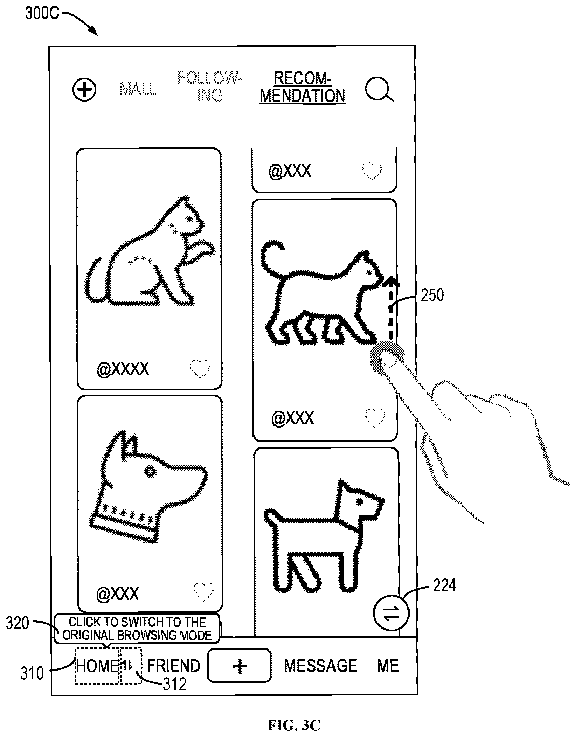

In response to detecting a second selection operation on or within an adjacent area of the navigation tab 'home' 310, the first view mode (e.g., a single-column mode) may be switched to the second view mode (e.g., a dual-column mode), as shown in example 300B of FIG. 3B. As such, in the second view mode, more multimedia content items may be viewed in the dual-column mode (or a further multi-column mode). The content presentation mode in the second view mode is similar to that discussed above, including adjustment of the presentation mode of the third switching control 222, and the like. For example, as shown in the example 300C of FIG. 3C, the description information 240 may be presented for describing information about the dual-column mode. In addition, as shown in FIG. 3C, the guidance information 320 may also be presented to guide the user to indicate to click the navigation tab 'home' 310 to switch back to the single-column mode. In addition, if it is detected that the predetermined operation 250 for scrolling the page of the content presentation page in the second view mode, the presentation mode of the third switching control 222 may be adjusted, for example, a reduced view is presented as the switching control 224 in FIG. 3C, and its presentation position is placed in the lower right corner of the page. In this way, the user may conveniently browse the content in the dual-column mode, thereby avoiding blocking or occupying the page focus area.

In addition, similarly, in the second view mode, in response to detecting a third selection operation for the navigation tab, the second view mode may be switched to the first view mode. In the example of FIG. 3C, if a re-click operation on the navigation tab 'Home' 310 or within its adjacent area is detected, the content may be switched back to the first view mode as shown in FIG. 3A.

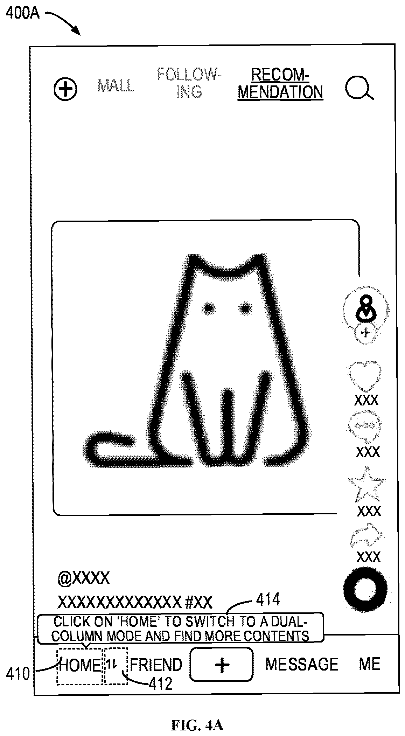

**In** addition to the selection operation on or within the adjacent area of the navigation tab, in some embodiments, the selection operation for switching from the first view mode to the second view mode may also include presenting a particular window through a predetermined operation on the navigation tab, and listing the switching control in the window. FIGS. 4A-4D illustrate examples of such a switch viewing module.

**In** an example 400A shown in FIG. 4A, the media content item is presented in the first view mode (e.g., a single-column mode) in the page by navigating a tab 'Home' 410 to the current content presentation page. In addition, a graphical interface element 412 of a predetermined shape and guidance information 414 are also presented near the navigation tab 'Home' 410. The guidance information 414 is configured to guide the user to indicate that clicking the navigation tab 'Home' 410 may implement switching to a dual-column mode.

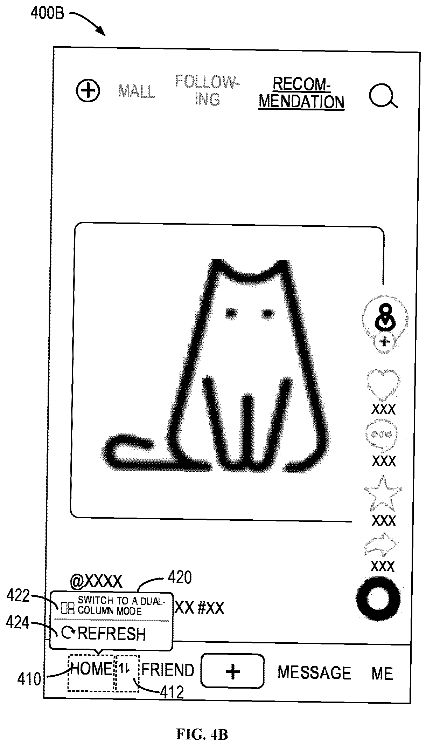

A predetermined operation, such as a click operation, on the navigation tab is detected while the first set of media content items are presented in the first view mode in the content presentation page. In response to detecting a predetermined operation on the navigation tab, a first window is presented in association with the navigation tab, the window including at least a first switching control. For example, if a click operation on the navigation tab 'Home' is detected in FIG. 4A, a window 420 as shown in an example 400B of FIG. 4B is presented that is presented in association with the navigation tab 'Home' 410. For example, the window 420 may be presented in the form of a bubble window, although any other form is possible. The window 420 includes at least a first switching control 422 for switching from a first view mode to a second view mode (e.g., dual-column mode).

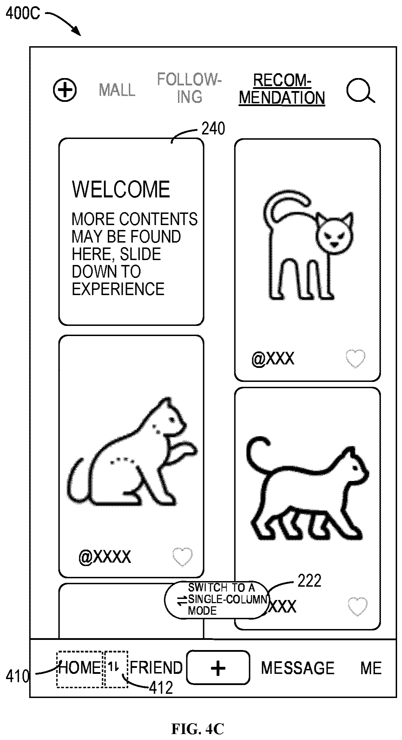

**If** a selection operation on the first switching control 422 is detected, the first view mode is switched to the second view mode, as shown in an example 400C of FIG. 4C. As such, in the second view mode, more multimedia content items may be viewed in a dual-column mode (or other multi-column mode). The content presentation mode in the second view mode is similar to that discussed above, including adjustment of the presentation mode of the third switching control 222, and the like. Details are not described herein again.

Further, in some embodiments, the first window presented by the predetermined operation on the navigation tab may further include a first refresh control configured to refresh the media content item presented in the content presentation page in the current first view mode. As shown in FIG. 4B, the window 420 presented by the predetermined operation on the navigation tab may further include a first refresh control 424 for refreshing the media content item presented in the content presentation page in the current view mode. In response to detecting a selection operation on the first refresh control 422, the media content item presented in the first view mode in the content presentation page is refreshed. In this way, through the predetermined operation on the navigation tab itself, the user may select to perform switching of the view mode or perform content refreshing as needed, which may satisfy diversified interaction requirements of the user.

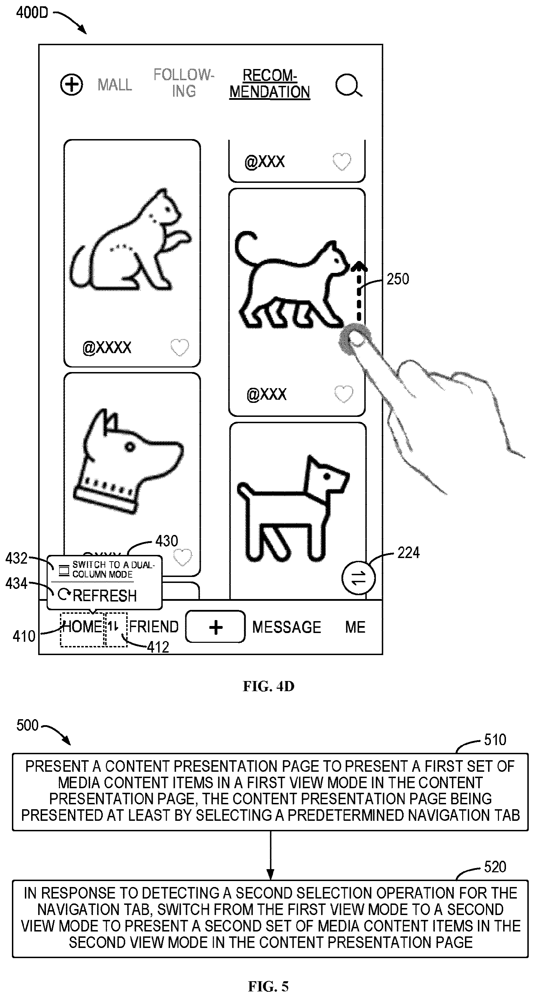

**In** addition, similarly, in the second view mode, in response to detecting the third selection operation for the navigation tab, the second view mode may be switched to the first view mode. In some embodiments, while the second set of media content items are presented in the second view mode in the content presentation page, the presentation of a particular window may also be supported by a predetermined operation on the navigation tab, and a second switching control is listed in the window for switching from the second view mode back to the first view mode. As shown in the example 400C of FIG. 4C, if a click operation on the navigation tab 'home' 410 is detected in FIG. 4C in the second view mode, a window 430 as shown in an example 400D of FIG. 4D is presented. The window 430 is presented in association with the navigation tab 'home'. For example, the window 430 may be presented in the form of a bubble window, although any other form is possible. The window 430 includes at least a second switching control 432 for switching from a second view mode (e.g., a dual-column mode) to a first view mode (e.g., a single-column mode).

**In** response to detecting a selection operation on the second switching control 432, the second view mode is switched to the first view mode, for example, the dual-column mode of FIG. 4D may be switched back to the single-column mode as shown in FIG. 4A. The content presentation manner in the first view mode is similar to that discussed above, and details are not described herein again.

Further, in some embodiments, the second window presented by the predetermined operation on the navigation tab may further include a second refresh control configured to refresh the media content item presented in the content presentation page in the current first view mode. As shown in FIG. 4D, the window 430 may further include a second refresh control 434 for refreshing the media content item presented in the content presentation page in the current view mode. In response to detecting a selection operation on the second refresh control 422, the media content item presented in the second view mode in the content presentation page is refreshed. In this way, in the second view mode, the user may still perform content refreshing or mode switching according to needs.

**In** the embodiments described with respect to FIGS. 4A to 4D, the navigation tab is a 'home' for description. The recommended page may be navigated through the navigation tab 'Home' 410. As previously described, as an example of a content presentation page, the recommended page is further navigated by a sub-tab 'recommendation' under 'Home'. In some embodiments, the embodiments described with respect to FIGS. 4A-4D may also be similarly applied to 'recommendation' tabs. That is, the first window or the second window may be similarly presented for user selection by a predetermined operation of 'recommendation' the navigation tab in the first view mode or the second view mode.

**In** some embodiments, if the page is switched from the current content presentation page to a further page, when the content presentation page is switched back again, the view mode of the content presentation page may remain the same as before the switching. Specifically, the second page switching operation is detected when the first view mode or the second view mode is presented, and the content presentation page is switched to the second page. The second page may be any other page to which the application supports switching. In response to detecting a third page switching operation, switching from the second page or a further page (depending on whether the page switching is performed in the second page) back to the content presentation page, in which the first view mode or the second view mode before the switching is maintained for presentation. That is, if the content presentation is performed in the first view mode before switching, the content presentation is still performed in the first view mode when switching back to the content presentation page. Similar for the second view mode. In this way, the consistency of the user on the content view mode may be maintained after the page is switched.

**In** summary, according to various embodiments of the present disclosure, a convenient and intuitive switching scheme for a view mode is provided. By adding one or more graphical interface elements, the guidance information, the description information, and the switching control, the user may be prompted to explore a new switching mode, thereby breaking through the use habit of the user. Further, by increasing the animation effect of the switching control and adjusting the presentation mode of the switching control, not only may the user be reminded in a more eye-catching manner, but also the influence on the user to view the media content is reduced as much as possible.

### Example Process

**FIG.** 5 shows a flowchart of a method 500 for content presentation according to some embodiments of the present disclosure. The method 500 may be implemented at the terminal device 110. The method 500 is described below with reference to FIG. 1.

At block 510, the terminal device 110 presents a content presentation page to present a first set of media content items in a first view mode in the content presentation page, the content presentation page being presented at least by selecting a predetermined navigation tab.

**In** some embodiments, presenting the content presentation page includes: in response to detecting a first selection operation for the navigation tab or in response to detecting a launch operation of an application, present the content presentation page to present the first set of media content items in the first view mode in the content presentation page.

At block 520, the terminal device 110, in response to detecting a second selection operation for the navigation tab, switches from the first view mode to a second view mode to present a second set of media content items in the second view mode in the content presentation page.

**In** some embodiments, the terminal device 110 presents a graphical interface element having a predetermined shape within a predetermined adjacent area of the navigation tab, the graphical interface element indicating that a view mode of the content presentation page is switchable.

**In** some embodiments, the terminal device 110, in response to detecting a first page switching operation, switches from the content presentation page to a first page; and with the first page being presented, ceases presenting of the graphical interface element within the predetermined adjacent area of the navigation tab, the presenting of the navigation tab being maintained.

**In** some embodiments, the second selection operation includes a selection operation on the navigation tab or a predetermined adjacent area of the navigation tab.

In some embodiments, in order to switch from the first view mode to the second view mode, the terminal device 110 detects a first predetermined operation on the navigation tab when presenting the first set of media content items in the first view mode in the content presentation page; in response to detecting the predetermined operation on the navigation tab, presents a first window in association with the navigation tab, the first window including at least a first switching control; and in response to detecting a selection operation on the first switching control, switches from the first view mode to the second view mode.

In some embodiments, the first window further includes a first refresh control, and the terminal device 110, in response to detecting a selection operation on the first refresh control, refreshes a media content item presented in the first view mode in the content presentation page.

In some embodiments, the terminal device 110 may also detects a second predetermined operation on the navigation tab with the second set of media content items being presented in the second view mode in the content presentation page; in response to detecting the second predetermined operation on the navigation tab, presents a second window in association with the navigation tab, the second window including at least a second switching control; and in response to detecting a selection operation on the second switching control, switches from the second view mode to the first view mode.

In some embodiments, the second window further includes a second refresh control. In some embodiments, the terminal device 110 may further, in response to detecting a selection operation on the second refresh control, refreshes a media content item presented in the second view mode in the content presentation page.

**In** some embodiments, the terminal device 110, in response to detecting a third selection operation for the navigation tab, switches from the second view mode to the first view mode to present the first set of media content items in the first view mode in the content presentation page.

**In** some embodiments, the terminal device 110 presents a third switching control in the content presentation page when presenting in the second view mode; and in response to detecting a selection operation on the third switching control, switches from the second view mode to the first view mode to present the first set of media content items in the first view mode in the content presentation page.

In some embodiments, in response to detecting a predetermined operation for page scrolling when presenting in the second view mode, the terminal device 110 adjusts a presentation mode of the third switching control, the adjusted presentation mode including at least one of the following: presenting the third switching control in a reduced view, or moving the third switching control to an edge area of the content presentation page for presentation.

In some embodiments, to present the third switching control, the terminal device 110 presents the third switching control with an animation effect when switching from the first view mode to the second view mode.

In some embodiments, after switching from the first view mode to the second view mode, the terminal device 110 presents description information about the second view mode in a predetermined area of the content presentation page.

In some embodiments, in response to detecting a second page switching operation when presenting in the first view mode or the second view mode, the terminal device 110 switches from the content presentation page to a second page; and in response to detecting a third page switching operation, switches to the content presentation page, maintains, in the content presentation page, the presenting in the first view mode or the second view mode before the switching.

In some embodiments, the first view mode includes a single-column view mode and the second view mode includes a multi-column view mode.

In some embodiments, the terminal device 110 presents guidance information in association with the navigation tab.

### Example Apparatus and Device

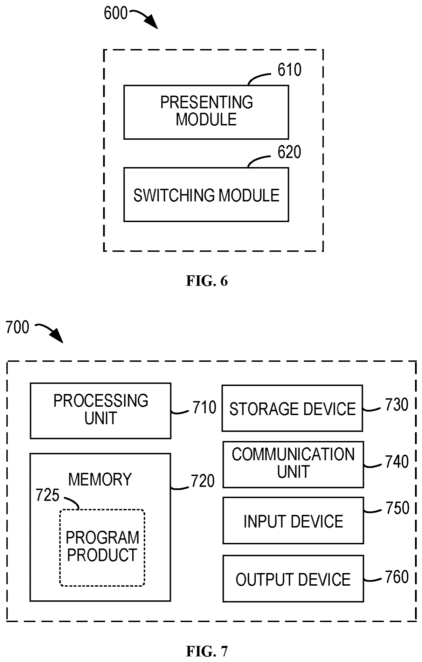

**FIG.** 6 shows a schematic structural block diagram of an apparatus 600 for content presentation according to some embodiments of the present disclosure. The apparatus 600 may be implemented or included in the terminal device 110. The various modules/components in the apparatus 600 may be implemented by hardware, software, firmware, or any combination thereof.

As shown, the apparatus 600 includes a presenting module 610 configured to present a content presentation page to present a first set of media content items in a first view mode in the content presentation page, the content presentation page being presented at least by selecting a predetermined navigation tab. The apparatus 600 further includes a switching module 620 configured to, in response to detecting a second selection operation for the navigation tab, switch from the first view mode to a second view mode to present a second set of media content items in the second view mode in the content presentation page.

**In** some embodiments, the apparatus 600 further includes a graphical element presenting module configured to present a graphical interface element having a predetermined shape within a predetermined adjacent area of the navigation tab, the graphical interface element indicating that a view mode of the content presentation page is switchable.

**In** some embodiments, the apparatus 600 further includes: a first switching module configured to, in response to detecting a first page switching operation, switch from the content presentation page to a first page; and a stopping presenting module configured to, with the first page being presented, cease presenting of the graphical interface element within the predetermined adjacent area of the navigation tab, the presenting of the navigation tab being maintained.

**In** some embodiments, the switching module 620 is configured to, in response to detecting a first selection operation for the navigation tab or in response to detecting a launch operation of an application, present the content presentation page to present the first set of media content items in the first view mode in the content presentation page.

**In** some embodiments, the second selection operation includes a selection operation on the navigation tab or a predetermined adjacent area of the navigation tab.

**In** some embodiments, in order to switch from the first view mode to the second view mode, the presenting module 610 includes a first predetermined operation detecting module configured to detect a first predetermined operation on the navigation tab when presenting the first set of media content items in the first view mode in the content presentation page; in response to detecting the predetermined operation on the navigation tab, present a first window in association with the navigation tab, the first window including at least a first switching control; and in response to detecting a selection operation on the first switching control, switch from the first view mode to the second view mode.

**In** some embodiments, the first window further includes a first refresh control, and the apparatus 600 further includes a first refresh module configured to, in response to detecting a selection operation on the first refresh control, refresh a media content item presented in the first view mode in the content presentation page.

**In** some embodiments, the apparatus 600 further includes a second predetermined operation detecting module configured to detect a second predetermined operation on the navigation tab with the second set of media content items being presented in the second view mode in the content presentation page; a second window presenting module configured to, in response to detecting the second predetermined operation on the navigation tab, present a second window in association with the navigation tab, the second window including at least a second switching control; and a second control detecting module configured to, in response to detecting a selection operation on the second switching control, switch from the second view mode to the first view mode.

**In** some embodiments, the second window further includes a second refresh control. In some embodiments, the apparatus 600 further includes a second refreshing module configured to, in response to detecting a selection operation on the second refresh control, refresh a media content item presented in the second view mode in the content presentation page.

**In** some embodiments, the apparatus 600 further includes a second switching module configured to, in response to detecting a third selection operation for the navigation tab, switch from the second view mode to the first view mode to present the first set of media content items in the first view mode in the content presentation page.

**In** some embodiments, the apparatus 600 further includes a third switching control presenting module configured to present a third switching control in the content presentation page when presenting in the second view mode; and a third switching module configured to, in response to detecting a selection operation on the third switching control, switch from the second view mode to the first view mode to present the first set of media content items in the first view mode in the content presentation page.

**In** some embodiments, the apparatus 600 further includes a control adjusting module configured to, in response to detecting a predetermined operation for page scrolling when presenting in the second view mode, adjust a presentation mode of the third switching control, the adjusted presentation mode including at least one of the following: presenting the third switching control in a reduced view, or moving the third switching control to an edge area of the content presentation page for presentation.

**In** some embodiments, to present the third switching control, the third switching control rendering module is further configured to present the third switching control with an animation effect when switching from the first view mode to the second view mode.

**In** some embodiments, the apparatus 600 further includes a description information presenting module configured to, after switching from the first view mode to the second view mode, present description information about the second view mode in a predetermined area of the content presentation page.

**In** some embodiments, the apparatus 600 further includes a second page switching module configured to, in response to detecting a second page switching operation when presenting in the first view mode or the second view mode, switch from the content presentation page to a second page; and a third page switching module configured to, in response to detecting a third page switching operation, switch to the content presentation page, maintain, in the content presentation page, the presenting in the first view mode or the second view mode before the switching.

**In** some embodiments, the first view mode includes a single-column view mode and the second view mode includes a multi-column view mode.

**In** some embodiments, the apparatus 600 further includes a guidance information presenting module configured to present guidance information in association with the navigation tab.

**FIG.** 7 shows a block diagram illustrating an electronic device 700 in which one or more embodiments of the present disclosure may be implemented. It would be appreciated that the electronic device 700 shown in FIG. 7 is merely illustrative and should not constitute any limitation on the functionality and scope of the embodiments described herein. The electronic device 700 shown in FIG. 7 may be used to implement the terminal device110 in FIG. 1.

As shown in FIG. 7, the electronic device 700 is in the form of a general-purpose electronic device. Components of the electronic device 700 may include, but are not limited to, one or more processors or processing units 710, a memory 720, a storage device 730, one or more communications units 740, one or more input devices 750, and one or more output devices 760. The processing unit 710 may be an actual or virtual processor and may perform various processes according to programs stored in the memory 720. In a multiprocessor system, a plurality of processing units execute computer executable instructions in parallel, so as to improve the parallel processing capability of the electronic device 700.

**The** electronic device 700 typically includes a number of computer storage media. Such media may be any available media that are accessible by electronic device 700, including, but not limited to, volatile and non-volatile media, removable and non-removable media. The memory 720 may be a volatile memory (e. g., a register, cache, random access memory (RAM)), non-volatile memory (e.g., read-only memory (ROM), electrically erasable programmable read-only memory (EEPROM), flash memory), or some combination thereof. The storage device 730 may be a removable or non-removable medium and may include a machine-readable medium such as a flash drive, a magnetic disk, or any other medium that may be used to store information and/or data (for example, training data for training) and that may be accessed within the electronic device 700.

**The** electronic device 700 may further include additional removable/non-removable, volatile/nonvolatile storage media. Although not shown in FIG. 7, a magnetic disk drive for reading from or writing to a removable, nonvolatile magnetic disk such as a 'floppy disk' and an optical disk drive for reading from or writing to a removable, nonvolatile optical disk may be provided. In these cases, each drive may be connected to a bus (not shown) by one or more data media interfaces. The memory 720 may include a computer program product 725 having one or more program modules configured to perform various methods or actions of various embodiments of the present disclosure.

**The** communication unit 740 implements communication with other electronic devices through a communication medium. In addition, functions of components of the electronic device 700 may be implemented by a single computing cluster or a plurality of computing machines, and these computing machines may communicate through a communication connection. Thus, the electronic device 700 may operate in a networked environment using logical connections to one or more other servers, network personal computers (PCs), or another network node.

**The** input device 750 may be one or more input devices such as a mouse, keyboard, trackball, etc. The output device 760 may be one or more output devices such as a display, speaker, printer, etc. The electronic device 700 may also communicate with one or more external devices (not shown) such as a storage device, a display device, or the like through the communication unit 740 as required, and communicate with one or more devices that enable a user to interact with the electronic device 700, or communicate with any device (e. g., a network card, a modem, or the like) that enables the electronic device 700 to communicate with one or more other electronic devices. Such communication may be performed via an input/output (I/O) interface (not shown).

According to an illustrative implementation of the present disclosure, a computer readable storage medium is provided, on which a computer-executable instruction is stored, wherein the computer executable instruction is executed by a processor to implement the above-described method. According to an illustrative implementation of the present disclosure, there is also provided a computer program product, which is tangibly stored on a non-transitory computer readable medium and includes computer-executable instructions that are executed by a processor to implement the method described above.

Aspects of the present disclosure are described herein with reference to flowchart and/or block diagrams of methods, apparatus, devices and computer program products implemented in accordance with the present disclosure. It will be appreciated that each block of the flowcharts and/or block diagrams and combinations of blocks in the flowchart and/or block diagrams may be implemented by computer readable program instructions.

These computer readable program instructions may be provided to a processing unit of a general-purpose computer, special purpose computer, or other programmable data processing apparatus to produce a machine, such that the instructions, which execute via the processing unit of the computer or other programmable data processing apparatus, create means for implementing the functions/actions specified in one or more blocks of the flowchart and/or block diagrams. These computer readable program instructions may also be stored in a computer readable storage medium that may direct a computer, a programmable data processing apparatus, and/or other devices to function in a particular manner, such that the computer readable medium storing the instructions includes an article of manufacture including instructions which implement various aspects of the functions/actions specified in one or more blocks of the flowchart and/or block diagrams.

The computer readable program instructions may be loaded onto a computer, other programmable data processing apparatus, or other devices, causing a series of operational steps to be performed on a computer, other programmable data processing apparatus, or other devices, to produce a computer implemented process such that the instructions, when being executed on the computer, other programmable data processing apparatus, or other devices, implement the functions/actions specified in one or more blocks of the flowchart and/or block diagrams.

The flowcharts and block diagrams in the drawings illustrate the architecture, functionality, and operations of possible implementations of the systems, methods and computer program products according to various implementations of the present disclosure. In this regard, each block in the flowchart or block diagram may represent a module, segment, or portion of instructions which includes one or more executable instructions for implementing the specified logical function(s). In some alternative implementations, the functions marked in the blocks may occur in a different order than those marked in the drawings. For example, two consecutive blocks may actually be executed in parallel, or they may sometimes be executed in reverse order, depending on the function involved. It should also be noted that each block in the block diagrams and/or flowcharts, as well as combinations of blocks in the block diagrams and/or flowcharts, may be implemented using a dedicated hardware-based system that performs the specified function or operations, or may be implemented using a combination of dedicated hardware and computer instructions.

Various implementations of the disclosure have been described as above, the foregoing description is illustrative, not exhaustive, and the present application is not limited to the implementations as disclosed. Many modifications and variations will be apparent to those of ordinary skill in the art without departing from the scope and spirit of the implementations as described. The selection of terms used herein is intended to best explain the principles of the implementations, the practical application, or improvements to technologies in the marketplace, or to enable those skilled in the art to understand the implementations disclosed herein.

## Claims

1. A method of content presentation, comprising:
presenting a content presentation page to present a first set of media content items in a first view mode in the content presentation page, the content presentation page being presented at least by selecting a predetermined navigation tab; and
in response to detecting a second selection operation for the navigation tab, switching from the first view mode to a second view mode to present a second set of media content items in the second view mode in the content presentation page.

2. The method of claim 1, further comprising:
presenting a graphical interface element having a predetermined shape within a predetermined adjacent area of the navigation tab, the graphical interface element indicating that a view mode of the content presentation page is switchable.

3. The method of claim 2, further comprising:
in response to detecting a first page switching operation, switching from the content presentation page to a first page; and
with the first page being presented, ceasing presenting of the graphical interface element within the predetermined adjacent area of the navigation tab, the presenting of the navigation tab being maintained.

4. The method of claim 1, wherein presenting the content presentation page comprises:
in response to detecting a first selection operation for the navigation tab or in response to detecting a launch operation of an application, presenting the content presentation page to present the first set of media content items in the first view mode in the content presentation page.

5. The method of claim 1, wherein the second selection operation comprises a selection operation on the navigation tab or a predetermined adjacent area of the navigation tab.

6. The method of claim 1, wherein switching from the first view mode to the second view mode comprises:
detecting a first predetermined operation on the navigation tab when presenting the first set of media content items in the first view mode in the content presentation page;
in response to detecting the predetermined operation on the navigation tab, presenting a first window in association with the navigation tab, the first window comprising at least a first switching control; and
in response to detecting a selection operation on the first switching control, switching from the first view mode to the second view mode.

7. The method of claim 6, wherein the first window further comprises a first refresh control, and the method further comprises:
in response to detecting a selection operation on the first refresh control, refreshing a media content item presented in the first view mode in the content presentation page.

8. The method of claim 6, further comprising:
detecting a second predetermined operation on the navigation tab with the second set of media content items being presented in the second view mode in the content presentation page;
in response to detecting the second predetermined operation on the navigation tab, presenting a second window in association with the navigation tab, the second window comprising at least a second switching control; and
in response to detecting a selection operation on the second switching control, switching from the second view mode to the first view mode.

9. The method of claim 8, wherein the second window further comprises a second refresh control, and the method further comprises:
in response to detecting a selection operation on the second refresh control, refreshing a media content item presented in the second view mode in the content presentation page.

10. The method of claim 1, further comprising:
in response to detecting a third selection operation for the navigation tab, switching from the second view mode to the first view mode to present the first set of media content items in the first view mode in the content presentation page.

11. The method of claim 1, further comprising:
presenting a third switching control in the content presentation page when presenting in the second view mode; and
in response to detecting a selection operation on the third switching control, switching from the second view mode to the first view mode to present the first set of media content items in the first view mode in the content presentation page.

12. The method of claim 11, further comprising:
in response to detecting a predetermined operation for page scrolling when presenting in the second view mode, adjusting a presentation mode of the third switching control, the adjusted presentation mode comprising at least one of the following:
presenting the third switching control in a reduced view, or
moving the third switching control to an edge area of the content presentation page for presentation.

13. The method of claim 11, wherein presenting the third switching control comprises:
presenting the third switching control with an animation effect when switching from the first view mode to the second view mode.

14. The method of claim 1, further comprising:
after switching from the first view mode to the second view mode, presenting description information about the second view mode in a predetermined area of the content presentation page.

15. The method of claim 1, further comprising:
in response to detecting a second page switching operation when presenting in the first view mode or the second view mode, switching from the content presentation page to a second page; and
in response to detecting a third page switching operation, switching to the content presentation page, maintaining, in the content presentation page, the presenting in the first view mode or the second view mode before the switching.

16. The method of claim 1, wherein the first view mode comprises a single-column view mode and the second view mode comprises a multi-column view mode.

17. The method of claim 1, further comprising:
presenting guidance information in association with the navigation tab.

18. An apparatus for content presentation, comprising:
a presenting module configured to present a content presentation page to present a first set of media content items in a first view mode in the content presentation page, the content presentation page being presented at least by selecting a predetermined navigation tab; and
a switching module configured to, in response to detecting a second selection operation for the navigation tab, switch from the first view mode to a second view mode to present a second set of media content items in the second view mode in the content presentation page.

19. An electronic device, comprising:
at least one processing unit; and
at least one memory coupled to the at least one processing unit and storing instructions for execution by the at least one processing unit, the instructions, when executed by the at least one processing unit, causing the electronic device to perform the method of any of claims 1 to 17.

20. A computer-readable storage medium having a computer program stored thereon, the computer program being executable by a processor to implement the method of any of claims 1 to 17.
